# EUROPÄISCHE PATENTSCHRIFT

(11) **EP 3 502 502 B1**
(45) Veröffentlichungstag und Bekanntmachung des Hinweises auf die Patenterteilung: **08.07.2020**
(21) Anmeldenummer: 18020626.0
(22) Anmeldetag: 04.12.2018
(51) Int. Cl.: E06B 9/174

(54) **MARKISENANORDNUNG**
AWNING ASSEMBLY
ENSEMBLE STORE

(30) Priorität: 13.12.2017 DE 202017006404 U
(43) Veröffentlichungstag der Anmeldung: 26.06.2019
(73) Patentinhaber: Erhardt Markisenbau GmbH, 89349 Burtenbach (DE)
(72) Erfinder: Schock, Hans, 89537 Giengen (DE); Grundler, Kai, 93197 Zeitlarn (DE); Marian, Wolfgang, 89343 Jettingen-Scheppach (DE)
(74) Vertreter: Patentanwälte Munk

(56) Entgegenhaltungen:
- DE-C1- 19 546 203
- DE-U1- 20 107 788
- Boflex: "Store véranda Climavelum 500 - instructions de montage et de raccordement électrique", , 1. März 2013 (2013-03-01), XP055585310, Gefunden im Internet: URL:https://www.boflex.be/sites/default/fi les/document/clima_500_-_montagehandleidin g_fr_03_2013.pdf [gefunden am 2019-05-03]

## Beschreibung

Die Erfindung betrifft eine Markisenanordnung mit mehreren, nebeneinander angeordneten Markisen, die koaxiale Wickelwellen zum Auf- und Abwickeln eines jeweils zugeordneten Markisentuchs aufweisen, wobei die koaxial nebeneinander angeordneten Wickelwellen jeweils mittels einer formschlüssigen Kupplung drehschlüssig miteinander verbindbar sind und wobei zumindest eine der miteinander verbundenen Wickelwellen mit einer Antriebseinrichtung versehen ist.

Bei einer Markisen-Mehrfachanordnung kann es vorkommen, dass die Markisentücher nicht exakt gleich lang sind. Um dies zu korrigieren werden die Wickelwellen bei geöffneter Kupplung gegeneinander verdreht. Bei den bekannten Anordnungen ober genannter Art sind die Wickelwellen mittels einer als Keilkupplung ausgebildeten Kupplung drehschlüssig miteinander verbunden, wobei die Enden der Wickelwellen mit einander zugewandten, stirnseitigen Schlitzen versehen sind, in die ein die Stoßstelle zwischen der Wellenenden überbrückender Keil eingreift. Nachteilig dabei ist, dass die Wickelwellen hier jeweils nur in 180°-Schritten gegeneinander verdreht werden können, was nur eine grobe Korrektur der Tuchlängen ermöglicht, so dass es nach wie vor zu einem Versatz der vorderen Tuchenden kommen kann.

Eine solche Markisen-Mehrfachanordnung ist aus dem folgenden pdf Dokument bekannt :

Boflex. "Store veranda Climavelum 500 - instructions de montage et de raccordement electrique" [online], 1. März 2013 [gefunden am 2019-05-03]. Gefunden im Internet unter dem Link : <https://www.boflex.be/sites/default/files/document/clima_500_-_montagehandleiding_fr_03_2013.pdf>

Hiervon ausgehend ist es daher die Aufgabe der vorliegenden Erfindung, eine Anordnung eingangs erwähnter Art mit einfachen und kostengünstigen Mitteln so zu verbessern, dass der Tuchversatz benachbarter Markisen auf ein Minimum reduzierbar ist.

Diese Aufgabe wird erfindungsgemäß dadurch gelöst, dass die drehschlüssig miteinander verbindbaren Wickelwellen jeweils einander zugewandte, durchmessergleiche Wellenstummel aufweisen, die als mit einer Umfangsverzahnung versehene Zahnritzel ausgebildet sind, die mittels geteilten Nabe überbrückbar sind, deren aneinander festlegbare Hälften die beiden Zahnritzel umfassen und eine Innenverzahnung mit mindestens einem mit der ritzelseitigen Außenverzahnung zum Eingriff bringbaren Zahn aufweisen.

Diese Maßnahmen stellen sicher, dass die beiden Ritzel und damit auch die zugehörigen Wickelwellen jeweils auch nur um einen Zahn und damit in sehr kleinen Schritten gegeneinander verstellt werden können, was eine sehr feine Korrektur bezüglich der Tuchlängen ermöglicht, so dass ein Versatz der Tuchenden so weit minimierbar ist, dass er praktisch auf die Entfernung mit blosem Auge nicht mehr feststellbar ist.

Vorteilhafte Ausgestaltungen und zweckmäßige Fortbildungen der übergeordneten Maßnahmen sind in den Unteransprüchen angegeben.

So kann vorgesehen sein, dass die beiden Nabenhälften jeweils nur im Bereich einander gegenüberliegender, nur bis zu fünf Zähne umfassenden Sektoren ihrer Innenoberfläche verzahnt sind. Diese Maßnahmen ergeben einerseits eine zuverlässige Kraftverteilung auf mehrere Zähne und stellen gleichzeitig sicher, dass die beiden Nabenhälften in radialer Richtung in und außer Eingriff mit den Zahnritzeln bringbar sind, was eine kompakte Bauweise ermöglicht und die Handhabung erleichtert.

Eine weitere vorteilhafte Maßnahme kann darin bestehen, dass die Verzahnungen der Zahnritzel und der Nabe jeweils als Feinverzahnung in Form einer Kerbverzahnung mit ebenen Flanken mit einer Flankenneigung von 60° und einer Zahnhöhe von maximal 3 mm ausgebildet sind. Hierdurch werden die vorstehend genannten Vorteile noch verstärkt.

In weiterer Fortbildung der übergeordneten Maßnahmen können die beiden Nabenhälften mit von ihren Enden abstehenden, paarweise in gegenseitige Anlage bringbaren und miteinander verschraubbaren Flanschen versehen sein. Dies ergibt eine sehr robuste und sinnfällige Anordnung.

Eine zweckmäßige Ausgestaltung kann dabei darin bestehen, dass die paarweise in gegenseitige Anlage bringbaren Flansche der beiden Nabenhälften an ihren Enden einerseits einen mittleren Büchsenabschnitt und andererseits zwei diese flankierende Büchsenabschnitte aufweisen, in denen die Enden eines den zwischen sie eingreifenden Büchsenabschnitt durchsetzenden Stifts aufgenommen sind, wobei der mittlere Büchsenabschnitt und/oder die seitlichen Büchsenabschnitte eine langlochartigen Innenquerschnitt aufweisen, so dass der Stift in der Höhe Bewegungsfreiheit hat. Diese Maßnahmen ergeben auch bei gelöster Verschraubung eine verliersichere Verbindung der beiden Nabenhälften mit für das Außereingriffbringen der Verzahnungen geeignetem Spiel, was die Bedienung zur Korrektur des Tuchversatzes erleichtert.

In weiterer Fortbildung der übergeordneten Maßnahmen kann die durch die Ritzel und die Nabe gebildete Kupplung im Bereich eines Spalts zwischen zwei einander zugewandten Gehäusedeckeln benachbarter Markisen angeordnet und durch eine den Spalt überbrückende Abdeckung abdeckbar sein, die zweckmäßig aus einem Unterteil und einem hieran ansteckbaren Oberteil besteht und stirnseitig an den Gehäusedeckeln festlegbar ist. Diese Maßnahmen ergeben eine optisch saubere Anordnung und schonende Unterbringung der Kupplung.

Weitere vorteilhafte Ausgestaltungen und zweckmäßige Fortbildungen der übergeordneten Maßnahmen sind in den restlichen Unteransprüchen angegeben und aus der nachstehenden Beschreibung eines bevorzugten Ausführungsbeispiels anhand der Zeichnung näher entnehmbar.

In der nachstehend beschriebenen Zeichnung zeigen:
- Figur 1: eine Markisenanordnung mit zwei nebeneinander angeordneten Markisen,
- Figur 2: eine schematische Draufsicht auf den oberen, gehäuseseitigen Bereich der Anordnung gemäß Figur 1 teilweise im Schnitt mit geöffneter Kupplung und
- Figur 3: einen neben der Kupplung geführten Radialschnitt durch die Anordnung gemäß Figur 2 mit geschlossener Kupplung.

Anwendungsgebiet der Erfindung sind Mehrfachanordnungen von Markisen aller Art. Dabei kann es sich vor allem um breiten, zu verschattenden Flächen, wie Dächern von Wintergärten oder Pergolen etc. zugeordnete Markisen handeln, wobei die zu verschattende Fläche breiter als die maximale Markisenbreite ist, so dass mehrere, nebeneinander angeordnete Markisen vorzusehen sind.

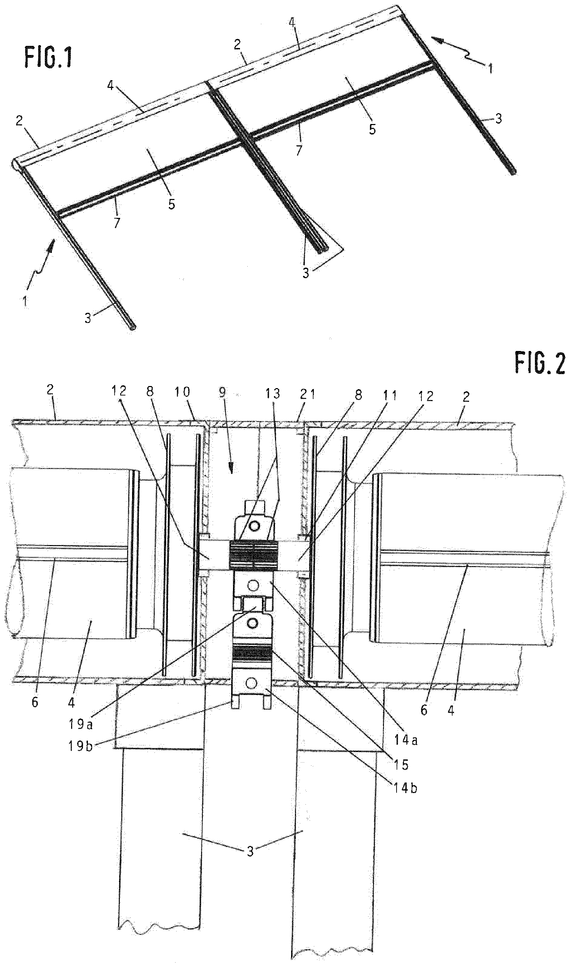

Die der Figur 1 zugrunde liegende Markisen-Mehrfachanordnung enthält zwei nebeneinander angeordnete Markisen 1, die jeweils ein im Bereich ihres oberen Rands angeordnetes Gehäuse 2 aufweisen, von dessen seitlichen Enden parallele Führungsschienen 3 nach unten abgehen. Die nebeneinander angeordneten Markisen 1 besitzen koaxiale, im Gehäuse 2 angeordnete, in Figur 1 lediglich durch eine strich-punktierte Linie angedeutete Wickelwellen 4, an denen das obere Ende eines jeweils zugeordneten, aus dem Gehäuse 2 ausfahrbaren bzw. in dieses einziehbaren Markisentuchs 5 angebracht ist. Die Wickelwellen 4 sind hierzu wie aus Figur 2 ersichtlich ist, mit einer Kedernut 6 versehen. Am unteren Ende der Markisentücher 5 ist jeweils, wie Figur 1 weiter zeigt, eine Fallstange 7 angebracht, die mit ihren Enden in die zugeordneten Führungsschienen 3 eingreift und hierdurch geführt wird. Auch das Markisentuch 5 kann mit seitlichen Randbereichen in die zugeordneten Führungsschienen 3 eingreifen.

Bei steil angeordneten Markisen, beispielsweise Senkrechtmarkisen, wird die Fallstange 7 durch die Schwerkraft nach unten bewegt. Sofern das Gefälle nicht ausreicht, um die Fallstange 7 durch die Schwerkraft nach unten zu bewegen, ist eine Gegenzuganlage mit an der Fallstange 7 angreifenden, einerseits am unteren Ende der Führungsschienen umgelenkten und andererseits über in Figur 2 gezeigte, auf den seitlichen Endbereichen der Wickelwellen 4 aufgenommene, den Gehäusestrinseiten benachbarte Bandrollen 8 laufen.

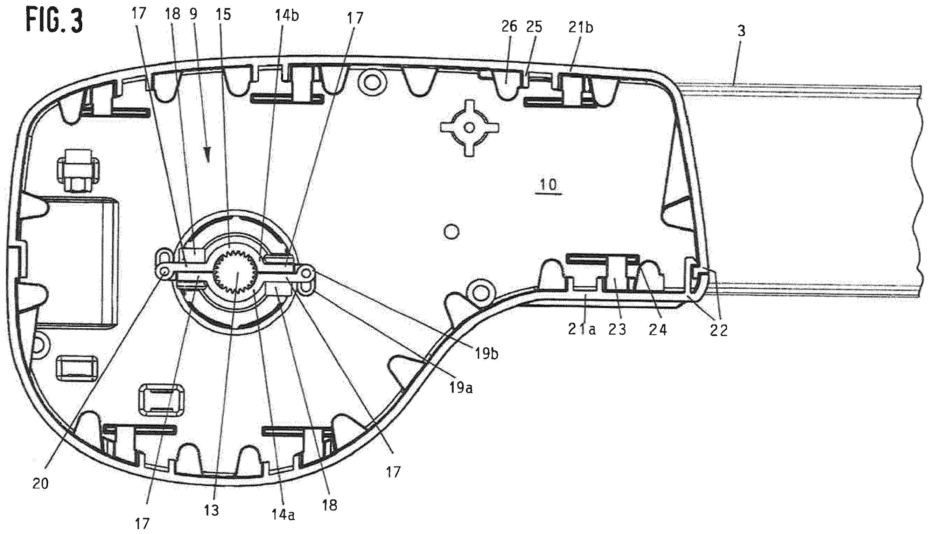

Die Markisentücher 5 der nebeneinander angeordneten Markisen 1 werden gleichförmig auf- bzw. abgewickelt. Hierzu werden die Wickelwellen 4 mittels einer nicht näher dargestellten Antriebseinrichtung gleichförmig angetrieben. Dabei sind die koaxialen Wickelwellen 4 der nebeneinander angeordneten Markisen 1 im Bereich ihrer einander zugewandten Enden drehschlüssig miteinander verbunden, so dass eine Antriebseinrichtung für den gesamten Wellenzug genügt. Die Wickelwellen 4 sind, wie aus Figur 2 ersichtlich ist, rohrförmig ausgebildet. Bei der Antriebseinrichtung kann es sich daher um einen in eine der Wickelwellen 4 eingesetzten Rohrmotor handeln. Aber auch eine manuell betätigbare, einer der Wickelwellen 4 zugeordnete Antriebseinrichtung wäre denkbar. Die drehschlüssige Verbindung der Wickelwellen 4 wird durch eine in Figur 2 im geöffneten Zustand und in Figur 3 im geschlossenen Zustand gezeigte formschlüssige Kupplung 9 bewerkstelligt.

Die Kupplung 9 befindet sich gemäß Figur 2 in einem Spalt zwischen den durch ihre Seitendeckel 10 gebildeten Stirnseiten der Gehäuse 2 der nebeneinander angeordneten Markisen 1. Die Wickelwellen 4 sind mit ihren Enden auf den Seitendeckeln 10 gelagert, wie in Figur 2 durch Lagerringe 11 angedeutet ist. Im Bereich der einander zugewandten Enden sind die Wickelwellen 4, wie Figur 2 weiter zeigt, mit den jeweils zugeordneten Seitendeckel 10 durchgreifenden, aufeinander zulaufenden Wellenstummeln 12 versehen. Diese besitzen den gleichen Durchmesser und sind im Bereich ihrer einander kontaktierenden oder zumindest bis auf ein geringes Spiel aneinander angenäherten Endbereichen jeweils als durchmessergleiche und identisch verzahnte Zahnritzel 13 ausgebildet, die mittels einer die Stoßstelle zwischen den beiden Ritzeln 13 überbrückenden, radial geteilten Nabe miteinander kuppelbar sind, deren Hälften 14a, 14b die beiden Zahnritzel 13 umfassen und eine Innenverzahnung 15 mit mindesten einem mit der ritzelseitigen Außenverzahnung zum Eingriff kommenden Zahn aufweisen. Die beiden Nabenhälften 14a,b sind nicht komplett, sondern nur teilverzahnt

Im der Figur 3 zugrunde liegenden geschlossenen Zustand der Nabe, d. h. wenn die beiden Nabenhälften aneinander angelegt sind, greifen die nabenseitige Innenverzahnung 15 in die über den ganzen Umfang vorgesehene Außerverzahnung der Ritzel 13 ein, wie Figur 3 zeigt, wodurch ein zuverlässiger Formschluss zwischen den Zahnritzeln 13 und der diese umgreifenden Nabenhälften 14a,b und damit eine drehschlüssig Verbindung der beiden Ritzel 13 gewährleistet ist. Im dargestellten Beispiel sind die beiden Nabenhälften 14a,b, wie Figur 3 weiter zeigt, nur im Bereich einander diametral gegenüberliegender Umfangssektoren mit einer Innenverzahnung 15 versehen. Dabei erstreckt sich jeder verzahnte Sektor nur über einige, vorzugsweise bis zu fünf Zähne. Die verzahnten Sektoren sind durch nicht verzahnte Zylinderbereiche flankiert, deren Durchmesser dem Fußdurchmesser der benachbarten Verzahnungen 15 entspricht.

Die in gegenseitigen Eingriff bringbaren Verzahnungen der Zahnritzel 13 und der beiden Nabenhälften 14a,b sind zweckmäßig als Feinverzahnung ausgebildet, die zweckmäßig als Kerbverzahnung hergestellt ist, wobei die Zähne ebene Seitenflanken mit einem Flankenwinkel von 60° und eine Höhe von bis zu 3 mm aufweisen können. Dies erleichtert das Anlegen der beiden Nabenhälften 14a,b in radialer Richtung.

Beide Nabenhälften 14a,b sind, wie aus den Figuren 2 und 3 ersichtlich ist, mit von den Enden ihrer Halb-Zylinderbereiche rechtwinklig abstehenden Flanschen 17 versehen, die bei der Figur 3 zugrundeliegender, geschlossener Nabe und damit geschlossener Kupplung aneinander anliegen und mittels zugeordneter Verbindungsschrauben 18 miteinander verschraubt sind. Die den beiden Flanschpaaren zugeordneten Verbindungsschrauben 18 sind gemäß Figur 3 gegenläufig. Bei gelöster Verschraubung sind die beiden Nabenhälften 14a,b lose mit Bewegungsfreiheit in radialer Richtung miteinander verbunden. Dabei ist soviel radiale Beweglichkeit vorgesehen, dass die Verzahnungen der beiden Nabenhälften 14a,b und der Zahnritzel 13 außer Eingriff gebracht werden können.

Hierzu sind die Flansche 17 der beiden Nabenhälften 14,b im Bereich ihrer Enden, wie am besten aus Figur 2 erkennbar ist, wechselseitig mit angeformten Büchsenabschnitten in Form eines mittleren Büchsenabschnitts 19a und seitlicher Büchsenabschnitte 19b versehen, die einen mittleren Büchsenabschnitt 19a flankieren und einen durch diesen durchgeführten Stift 20 tragen, so dass sich eine scharnierartige Verbindung ergibt. Dabei besitzen im dargestellten Beispiel die mittleren Büchsenabschnitte 19a einen langlochartigen Querschnitt, so dass der Stift 20 so viel radiale Beweglichkeit hat, dass die beiden Nabenhälften 14a,b in radialer Richtung soweit voneinander abhebbar sind, dass die Verzahnungen der Nabenhälften 14a,b und der Ritzel 13 außer Eingriff kommen können.

Auf diese Weise ist es möglich, bei voneinander abgehobenen Nabenhälften 14a,b die beiden Zahnritzel 13 und damit die zugehörigen Wickelwellen 4 um einen oder mehrere Zähne, minimal nur um einen Zahn der Verzahnungen der Zahnritzel 13 und der Nabenhälften 14a,b gegeneinander zu verdrehen, und dementsprechend die zugehörige Fallstange 7 entsprechend auf- bzw. abwärts zubewegen. Dadurch ist in Fällen in denen Markisentücher 5 der nebeneinander angeordneten Markisen 1 aufgrund von Toleranzen etc. ungleich lang sind, eine Feineinstellung der Position der Fallstangen 7 derart möglich, dass diese für das bloße Auge niveaugleich erscheinen.

Der oben erwähnte der Kupplung 9 zugeordnete Spalt zwischen den Gehäusen 2 der einander benachbarten Markisen 1 ist durch eine zugeordnete, in Figur 2 lediglich angedeutete, an den benachbarten Seitendeckeln 10 der einander benachbarten Markisengehäuse 2 anbringbare Abdeckung 21 verschlossen. Diese hat eine der Umfangskontur der nebeneinander angeordneten Gehäuse 2 entsprechende Umfangskontur, wie anschaulich aus Figur 3 ersichtlich ist. Die genannte Abdeckung besteht gemäß Figur 3 aus einem Unterteil 21a und einem auf dieses aufsteckbaren Oberteil 21b hierzu sind das Unterteil 21a und Oberteil 21b im Bereich ihrer einander zugewandten Ränder mit geeigneten Steckorganen 22 versehen. Die beiden Elemente der genannten Abdeckung 21 sind im Bereich ihrer stirnseitigen Enden an den einander benachbarten Seitendeckeln 10 der benachbarten Gehäuse 2 festlegbar und hierzu mit angeformten Haltelaschen 23 versehen, die in zugeordnete Schlitze 24 der Seitendeckel 10 eingreifen können. Zur Erzielung einer guten Positionsgenauigkeit können das Unterteil 21a und Oberteil 21b der Abdeckung mit quer verlaufenden Rippen 25 versehen sein, die an zugeordneten Anschlägen der Seitendeckel 10 der Gehäuse 2 zur Anlage kommen können. Diese Maßnahmen ermöglichen eine einfache Entfernung der Abdeckung zur Bewerkstelligung einer Zugänglichkeit zur Kupplung 9.

## Patentansprüche

1. Markisenanordnung mit mehreren, nebeneinander angeordneten Markisen (1), die koaxiale Wickelwellen (4) zum Auf- und Abwickeln eines jeweils zugeordneten Markisentuchs (5) aufweisen, wobei die koaxial nebeneinander angeordneten Wickelwellen (4) jeweils mittels einer formschlüssigen Kupplung (9) drehschlüssig miteinander verbindbar sind und wobei zumindest eine der miteinander verbundenen Wickelwellen (4) mit einer Antriebseinrichtung versehen ist, **dadurch gekennzeichnet, dass** die drehschlüssig miteinander verbindbaren Wickelwellen (4) jeweils einander zugewandte, durchmessergleiche Wellenstummel (12) aufweisen, die als mit einer umfangsseitigen Außenverzahnung versehene Zahnritzel (13) ausgebildet sind, die mittels einer geteilten Nabe überbrückbar sind, deren aneinander festlegbare Hälften (14a, 14b) die beiden Zahnritzel (13) umfassen und eine Innenverzahnung (15) mit mindestens einem mit der ritzelseitigen Außenverzahung zum Eingriff bringbaren Zahn aufweisen.

2. Markisenanordnung nach Anspruch 1, **dadurch gekennzeichnet, dass** die beiden Nabenhälften (14a, 14b) einander diametral gegenüberliegende Sektoren mit Innenverzahnung (15) aufweisen.

3. Markisenanordnung nach Anspruch 2, **dadurch gekennzeichnet, dass** die Innenverzahnung (15) jedes Sektors nur einige, vorzugsweise nur bis zu fünf Zähne umfasst.

4. Markisenanordnung nach einem der vorhergehenden Ansprüche, **dadurch gekennzeichnet, dass** die Verzahnungen der Zahnritzel (13) und der Nabenhälften (14a, 14b) jeweils als Feinverzahnung ausgebildet sind.

5. Markisenanordnung nach Anspruch 4, **dadurch gekennzeichnet, dass** die Verzahnungen der Zahnritzel (13) und Nabenhälften (14a, 14b) jeweils als Kerbverzahnung mit ebenen Flanken und einer Flankenneigung von 60° ausgebildet sind und eine Zahnhöhe von maximal 5 mm, vorzugsweise 3 mm, aufweisen.

6. Markisenanordnung nach einem der vorhergehenden Ansprüche, **dadurch gekennzeichnet, dass** die beiden Nabenhälften (14a, 14b) mit von den Enden ihrer halbzylindrischen Bereiche abstehenden, paarweise in gegenseitige Anlage bringbaren und miteinander verschraubbaren Flanschen (17) versehen sind, wobei die den aneinander anliegenden Flanschen (17) zugeordneten Schrauben (18) vorzugsweise gegenläufig ausgerichtet sind.

7. Markisenanordnung nach Anspruch 6, **dadurch gekennzeichnet, dass** die Flansche (17) der beiden Nabenhälften (14a, 14b) mit dem Zahneingriff der beiderseitigen Verzahnungen zumindest entsprechender, radialer Beweglichkeit aneinander angebracht sind.

8. Markisenanordnung nach Anspruch 7, **dadurch gekennzeichnet, dass** die paarweise in gegenseitige Anlage bringbaren Flansche (17) der beiden Nabenhälften (14a, 14b) an ihren Enden einerseits einen mittleren Büchsenabschnitt (19a) und anderseits seitliche Büchsenabschnitte (19b) aufweisen, in denen die Enden eines den zwischen sie eingreifenden Büchsenabschnitt durchsetzenden Stifts (20) aufgenommen sind und dass der mittlere Büchsenabschnitt (19a) und/oder die seitlichen Büchsenabschnitte (19b) einen langlochartigen Querschnitt aufweisen.

9. Markisenanordnung nach einem der vorhergehenden Ansprüche, **dadurch gekennzeichnet, dass** die Kupplung (9) in einem zwischen einander benachbarten Markisengehäusen (2) vorgesehenen Spalt platziert ist, dem eine Abdeckung (21) zugeordnet ist, die in ein Unterteil (21a) und hieran ansteckbares Oberteil (21b) unterteilt ist.

10. Markisenanordnung nach Anspruch 9, **dadurch gekennzeichnet, dass** die Abdeckung (21) eine der Umfangskontur der Gehäuse (2) entsprechende Umfangskontur aufweist und an den Gehäusedeckeln (10) der benachbarten Gehäuse (2) lösbar festlegbar ist.

## Claims

1. An awning assembly with several awnings (1) arranged side by side comprising coaxial reel shafts (4) for winding up or winding down an associated awning cloth (5), with each one of the reel shafts (4) arranged coaxially side by side being connectable in rotational engagement with each other by means of a positively engaging coupling (9), and with at least one of the reel shafts (4) being connected with each other being equipped with a drive device, **characterized in that** each one of the reel shafts (4) connectable with each other in rotational engagement comprise shaft butts (12) facing each other and having an equal diameter, which are designed as pinions (13) provided with circumferential external teeth, such pinions (13) being bridgeable by a split hub, whose two halves (14a, 14b) which are fixable to each other enclose both pinions (13) and comprise internal teeth (15) having at least one tooth which can be brought into engagement with the pinion-side external teeth.

2. An awning assembly in accordance with claim 1, **characterized in that** the two halves of the hub (14a, 14b) comprise two sectors with internal teeth (15) positioned diametrically opposite to each other.

3. An awning assembly in accordance with claim 2, **characterized in that** the internal teeth (15) of each sector comprises only a few, preferably only up to five teeth.

4. An awning assembly in accordance with any of the preceding claims, **characterized in that** each of the teeth of the pinion (13) and the hub halves (14a, 14b) are designed as fine teeth.

5. An awning assembly in accordance with claim 4, **characterized in that** each of the teeth of the pinion (13) and hub halves (14a, 14b) are designed as groove toothing with level flanks and a flank inclination of 60° and have a tooth height of 5 mm at a maximum, preferably 3 mm.

6. An awning assembly in accordance with any of the preceding claims, **characterized in that** the two hub halves (14a, 14b) are provided with screw-connectible flanges (17) protruding from the ends of their cylindrical half sections and which can pairwise be brought in mutual engagement, with the screws (18) associated with the flanges (17) mutually engaging each other are preferably aligned in opposite direction.

7. An awning assembly in accordance with claim 6, **characterized in that** that the flanges (17) of the two hub halves (14a, 14b) are attached to each other allowing for radial mobility at least corresponding to the tooth engagement of the mutual teeth.

8. An awning assembly in accordance with claim 7, **characterized in that** the flanges (17) of the two hub halves (14a, 14b), which are pairwise attachable in mutual contact, are fitted at their ends with a middle bush section (19a) on one side and with lateral bush sections (19b) and on the other side receiving the ends of a pin (20) penetrating a bush section engaging between the said bush sections (19b), and further that the middle bush section (19a) and/or the lateral bush sections (19b) have a cross section in the shape of a long hole.

9. An awning assembly in accordance with any of the preceding claims, **characterized in that** the coupling (9) is placed in a slot provided between neighbouring awning housings (2), such slot being associated with a cover (21) subdivided into a lower part (21a) and an upper part (21b) which can be clipped to the bottom part (21a).

10. An awning assembly in accordance with claim 9, **characterized in that** the cover (21) comprises a circumferential contour corresponding to the circumferential contour of the housing (2) and is detachably attachable to the housing covers (10) of the adjacent housings (2).

## Revendications

1. Ensemble de stores comprenant une pluralité de stores (1) qui sont disposés les uns à côté des autres et présentent des arbres d'enroulement (4) coaxiaux destinés à enrouler et à dérouler une toile de store (5) respectivement associée, dans lequel les arbres d'enroulement (4) disposés de façon coaxiale les uns à côté des autres peuvent être reliés chacun entre eux par liaison de rotation au moyen d'un accouplement à engagement positif (9) et dans lequel l'un au moins des arbres d'enroulement (4) reliés entre eux est pourvu d'un dispositif d'entraînement, **caractérisé par le fait que** les arbres d'enroulement (4) qui peuvent être reliés entre eux par liaison de rotation présentent chacun des tronçons d'arbres (12) de même diamètre qui se font face et qui sont réalisés en tant que pignons dentés (13) qui sont pourvus d'une denture extérieure périphérique et peuvent être pontés au moyen d'un moyeu divisé dont les moitiés (14a, 14b) aptes à être fixées l'une à l'autre entourent les deux pignons dentés (13) et présentent une denture intérieure (15) ayant au moins une dent qui peut être mise en prise avec la denture extérieure côté pignon.

2. Ensemble de stores selon la revendication 1, **caractérisé par le fait que** les deux moitiés de moyeu (14a, 14b) présentent des secteurs diamétralement opposés et ayant une denture intérieure (15).

3. Ensemble de stores selon la revendication 2, **caractérisé par le fait que** la denture intérieure (15) de chaque secteur ne comprend que quelques dents, de préférence jusqu'à cinq dents seulement.

4. Ensemble de stores selon l'une quelconque des revendications précédentes, **caractérisé par le fait que** les dentures des pignons dentés (13) et des moitiés de moyeu (14a, 14b) sont conçues chacune en tant que dentures fines.

5. Ensemble de stores selon la revendication 4, **caractérisé par le fait que** les dentures des pignons dentés (13) et des moitiés de moyeu (14a, 14b) sont conçues chacune en tant que denture à cannelures ayant des flancs plats et une inclinaison de flanc de 60° et présentent une hauteur de dent de 5 mm au maximum, de préférence 3 mm.

6. Ensemble de stores selon l'une quelconque des revendications précédentes, **caractérisé par le fait que** les deux moitiés de moyeu (14a, 14b) sont munies de flasques (17) qui font saillie des extrémités de leurs zones semi-cylindriques, peuvent être mises en appui mutuel par paires et être vissées les unes avec les autres, dans lequel les vis (18) associées aux flasques (17) en appui l'une contre l'autre sont orientées de préférence dans des directions opposées.

7. Ensemble de stores selon la revendication 6, **caractérisé par le fait que** les flasques (17) des deux moitiés de moyeu (14a, 14b) sont montées l'une à l'autre avec une mobilité radiale correspondant au moins à l'engrènement des dentures situées de part et d'autre.

8. Ensemble de stores selon la revendication 7, **caractérisé par le fait que** les flasques (17) des deux moitiés de moyeu (14a, 14b), qui peuvent être mises en appui mutuel par paires, présentent à leurs extrémités d'une part une section centrale de douille (19a) et d'autre part des sections latérales de douille (19b) dans lesquelles sont reçues les extrémités d'une tige (20) traversant la section de douille s'engageant entre elles, et que la section centrale de douille (19a) et/ou les sections latérales de douille (19b) présentent une section transversale de type de trou oblong.

9. Ensemble de stores selon l'une quelconque des revendications précédentes, **caractérisé par le fait que** l'accouplement (9) est placé dans une fente qui est prévue entre des boîtiers de store (2) voisins les uns des autres et à laquelle est associée une couverture (21) qui est divisée en une partie inférieure (21a) et en une partie supérieure (21b) apte à être engagée sur celle-ci.

10. Ensemble de stores selon la revendication 9, **caractérisé par le fait que** ladite couverture (21) présente un contour circonférentiel correspondant au contour circonférentiel des boîtiers (2) et peut être fixé de manière amovible aux couvercles de boîtier (10) des boîtiers (2) adjacents.
